# EUROPÄISCHE PATENTSCHRIFT

(11) **EP 2 508 082 B1**
(45) Veröffentlichungstag und Bekanntmachung des Hinweises auf die Patenterteilung: **18.12.2013**
(21) Anmeldenummer: 11161073.9
(22) Anmeldetag: 04.04.2011
(51) Int. Cl.: A23L 1/221, A23L 1/30, A23L 1/305, A23L 1/226

(54) **Nahrungsergänzungsmittelpräparat mit Aminosäuren und Gewürzextrakt**
Food supplement preparation with amino acids and spice extract
Préparation de complément alimentaire dotée d'acides aminés et d'extraits d'épices

(43) Veröffentlichungstag der Anmeldung: 10.10.2012
(73) Patentinhaber: PM-International AG, 1618 Luxembourg (LU)
(72) Erfinder: Dr. Schmitt, Gerhard, 64625 Bensheim (DE); Sorg, Rolf, 5444 Schengen (LU); Kühne, Tobias, 54497 Morbach (DE)
(74) Vertreter: Zech, Stefan Markus

(56) Entgegenhaltungen:
- WO-A1-99/43329
- FR-A1- 2 938 732
- GB-A- 2 292 522
- US-A- 5 536 506
- US-A1- 2001 006 983
- US-A1- 2004 052 873
- US-A1- 2004 191 388
- US-A1- 2010 303 961

## Beschreibung

Die Erfindung betrifft ein Nahrungsergänzungsmittelpräparat enthaltend die Aminosäuren Leucin, Isoleucin, Valin, Lysin, Phenylalanin, Threonin und Tryptophan.

Bei den genannten Aminosäuren handelt es sich um so genannte essentielle Aminosäuren, das heißt sie sind lebensnotwendig für den menschlichen Organismus, obwohl der menschliche Körper sie nicht aus elementaren Bestandteilen selbst aufbauen kann. Während z.B. autotrophe Organismen fähig sein können, die benötigten Aminosäuren selbst aus elementaren Bestandteilen aufzubauen, ist es beim Menschen dagegen unerlässlich, dass die essentiellen Aminosäuren über die Nahrung aufgenommen werden.

Leucin ist insbesondere wichtig für den Aufbau und Erhalt von Muskelgewebe. Es dient als Energielieferant und unterstützt Heilungsprozesse.

Isoleucin ist ebenfalls von Bedeutung für Muskelaufbau und als Energielieferant. Darüber hinaus wurden aber in verschiedenen Gebieten der Medizin vorteilhafte Eigenschaften von Isoleucin nachgewiesen, z.B. bei Störungen des Magen-Darm-Trakts.

Valin ist von besonderer Bedeutung für das Wachstum von neuem Gewebe und hilft bei dem Wiederaufbau von Gewebe z.B. nach Überlastung oder bei Verletzungen. Darüber hinaus wurde gezeigt, dass ein Mangel an Valin das menschliche Nervensystem und das Gehirn beeinträchtigen kann.

Lysin wirkt auf die Serotoninrezeptoren im Verdauungstrakt. In verschiedenen Studien wurde gezeigt, dass Lysin daher hilfreich ist bei der Behandlung von Angstzuständen. Es kann leicht beruhigend wirken, insbesondere bei Angstzuständen, die anderweitig nicht zu erklären sind. Darüber hinaus wurden Lysinkonjugate erfolgreich in der Krebstherapie eingesetzt, wo die Lysinkonjugate eine Selbstzerstörung von Krebszellen verursachen können. In Tierstudien wurde gezeigt, dass ein Mangel an Lysin zu einer Schwächung der Immunabwehr führen kann.

Phenylalanin hat eine schmerzstillende sowie antidepressive Wirkung. Hierbei werden insbesondere Gemische aus D-Phenylalanin und L-Phenylalanin verwendet. Der Bedarf des menschlichen Organismus an Phenylalanin ist u.a. vom Thyrosingehalt der Nahrung abhängig. Insbesondere bei einem Mangel an Thyrosin ist eine ausreichende Versorgung mit Phenylalanin von großer Bedeutung.

Unter den essentiellen Aminosäuren wurde Threonin als letztes entdeckt und auf die Wirkungsweise untersucht. Es ist davon auszugehen, dass viele vorteilhafte Eigenschaften von Threonin erst in den nächsten Jahren entdeckt werden.

Tryptophan wurde erfolgreich zur Reduktion von Übergewicht verwendet. Darüber hinaus kann es, da es im menschlichen Körper zu Serotonin umgewandelt wird, stimmungsaufhellende Wirkung haben.

Es hat sich gezeigt, dass spezielle Mengenverhältnisse der oben genannten Aminosäuren besonders vorteilhaft sind bzw. die Aminosäuren ihre vorteilhafte Wirkung überhaupt nur in diesen bestimmten Mengenverhältnissen entfalten. Im Nahrungsergänzungsmittelpräparat ist es von besonderer Bedeutung, dass die Resorption der vorgenannten Aminosäuren vollständig oder zumindest beinahe vollständig erfolgt. Insbesondere ist es für eine optimale Wirkung vorteilhaft, wenn die Resorption der verschiedenen Aminosäuren im Körper zur ungefähr gleichen Zeit stattfindet, damit auch während der Resorption die besonders vorteilhaften Mengenverhältnisse aufrechterhalten sind.

Bei bekannten Nahrungsmittelpräparaten der oben genannten Art kann es zu einer hohen Zeitdauer bis zur Resorption der Aminosäuren kommen. Darüber hinaus kann die Resorptionszeit für die einzelnen Aminosäuren unterschiedlich sein, so dass es bei der Aufnahme in den Blutkreislauf eben nicht zu dem vorteilhaften Mengenverhältnis kommt.

US 5 536 506 beschreibt die verbesserte Resorption von essentiellen Aminosaüren wie auch Vitaminen mittels Piperin.

Bei manchen der bekannten Nahrungsergänzungsmittel sind signifikante Mengen der Aminosäure Methionin ebenfalls im Präparat enthalten. Methionin ist zwar eine wichtige Quelle für den organisch gebundenen Schwefel und dient im Körper als Lieferant von Methylgruppen. Gleichzeitig kann jedoch durch eine vermehrte Aufnahme von Methionin die Bildung von Homozystein gefördert werden. Erhöhte Homozysteinspiegel gelten heute als eigenständiger Risikofaktor für Herz-Kreislauf-Erkrankungen und insbesondere für die Entstehung von Arteriosklerose. Die erhöhte Zufuhr von Methionin ist daher nur zu empfehlen, wenn gleichzeitig sichergestellt ist, dass eine übermäßige Bildung von Homozystein verhindert wird. Dies ist nicht bei allen bekannten Nahrungsergänzungsmittelpräparaten der oben genannten Art gegeben.

Aufgabe der vorliegenden Erfindung ist es somit, ein Nahrungsergänzungsmittelpräparat mit optimierten Resorptionseigenschaften für Aminosäuren, insbesondere für essentielle Aminosäuren, anzugeben. Darüber hinaus sollen die verschiedenen Aminosäuren und sonstigen Bestandteile des Nahrungsergänzungsmittelpräparats vorteilhaft aufeinander abgestimmt sein.

Es ist eine weitere Aufgabe der vorliegenden Erfindung, eine ungleichmäßige Resorption der Aminosäuren im Körper zu verhindern.

Diese Aufgabe wird gelöst durch ein Nahrungsergänzungsmittelpräparat mit den Merkmalen nach Anspruch 1. Vorteilhafte Weiterbildungen ergeben sich aus den abhängigen Ansprüchen. Gemäß Anspruch 1 enthält das Nahrungsergänzungsmittelpräparat ein Gewürzextrakt, das die Resorption der Aminosäuren beschleunigt und/oder optimiert.

Es hat sich gezeigt, dass die Reizwirkung von verschiedenen Gewürzextrakten im oberen Verdauungstrakt gleichzeitig eine beschleunigte und optimierte Resorption von Aminosäuren bewirken kann.

Durch die beschleunigte Resorption können die Aminosäuren mit geringerem Zeitabstand zur Einnahme ihre Wirkung entfalten. Darüber hinaus ist sichergestellt, dass alle Aminosäuren in geringem zeitlichem Abstand zueinander aufgenommen werden. Somit sind die korrekten Mengenverhältnisse auch bei dem Übergang in den Blutkreislauf sichergestellt.

Die Aminosäurenresorption wird durch den erfindungsgemäßen Gewürzextrakt, der insbesondere als Pfefferextrakt vorliegt, im Sinne einer Bioverfügbarkeitserhöhung positiv beeinflusst. Die Wirkung der Aminosäuren, insbesondere die Verfügbarkeit für den Muskelaufbau, wird dabei durch den erfindungsgemäßen Gewürzextrakt besonders verstärkt.

Gemäß einer bevorzugten Ausführungsform der Erfindung umfasst das Gewürzextrakt ein Pfefferextrakt, insbesondere ein Schwarzpfefferextrakt. Aus schwarzem Pfeffer (Piper nigrum) als Ausgangssubstanz lässt sich ein besonders effektiver Resorptionsbeschleuniger gewinnen.

Gemäß einer besonders bevorzugten Ausführungsform der Erfindung umfasst das Gewürzextrakt Piperin (chemische Bezeichnung 1-Piperoylpiperidin C₁₇ H₁₉NO₃), insbesondere als Alkaloid.

Gemäß einer weiteren besonders bevorzugten Ausführungsform enthält das Präparat Taurin.

Nahrungsergänzungsmittelpräparate mit einem breiten Wirkungsspektrum sollten auf jeden Fall auch zumindest eine schwefelhaltige Aminosäure enthalten.

Aufgrund der oben bereits genannten möglichen nachteiligen Nebenwirkungen bei erhöhter Methioninaufnahme wird bei einer konkreten Ausführungsform stattdessen die Verwendung der Quasi-Aminosäure Taurin vorgeschlagen. Taurin ist das stabile Endprodukt im Stoffwechsel der schwefelhaltigen Aminosäuren Zystein und Methionin. Etwa ein Drittel dieser schwefelhaltigen Aminosäuren wird zu Taurin umgewandelt. Taurin wird im Körper zwar nicht für den Proteinaufbau verwendet, es dient vielmehr der Stabilisierung des Flüssigkeitshaushaltes in den Zellen. Nach Glutamin ist Taurin die am höchsten konzentrierte Aminosäure im freien Aminosäurepool und in der Zellflüssigkeit. Für die Optimierung des Flüssigkeitshaushalts benötigt die Muskelzelle Taurin. Damit werden günstige Voraussetzungen für eine effektive Proteinsynthese geschaffen. Mit zunehmender sportlicher Belastung tritt ein Abfall der Taurinkonzentration im Aminosäurepool auf, was mit einer vermehrten Gluconeogenese zusammenhängt. Taurin verfügt außerdem über zellmembranschützende und antioxidative Eigenschaften. Es fördert die Bildung von Gallensaft als Emulgator bei der Fettverdauung. Weiterhin werden Taurin regulierende Funktionen im Herzmuskel zugeschrieben.

Gemäß der Erfindung umfasst das Präparat Methionin sowie zusätzlich Folsäure und/oder Vitamin B2 und/oder Vitamin B6 und/oder Vitamin B12.

Sofern eine Zufuhr von Methionin aufgrund der vorteilhaften Eigenschaften von Methionin erwünscht ist, wird somit durch die gleichzeitige Zufuhr der genannten B-Vitamine eine vermehrte Bildung von Homozystein verhindert.

Der Gewichtsanteil von Methionin liegt bei unter 1 Gew.-%. Eine vermehrte Zufuhr von Methionin kann neben der oben beschriebenen Homozysteinbildung auch zu einer verstärkten Kalziumausscheidung führen. Gefährdet sind hier vor allem weibliche Hochleistungssportler, deren oft sehr niedrige Körperfett- und Östrogenlevel einen erhöhten Kalziumverlust ohnehin begünstigen. Dies kann langfristig zu Osteoporose führen. Um dies auszuschließen, kann ein genannter niedriger Methioninanteil vorgesehen sein.

Gemäß einer weiteren Ausführungsform der Erfindung enthält das Präparat Histidin. Bei Histidin handelt es sich um eine semi-essentielle Alpha-Aminosäure. Besondere Bedeutung hat es als Ligand von Metallionenkomplexen der Elektronentransportketten in den Mitochondrien und in den Chloroplasten (zur Photosynthese).

Gemäß einer vorteilhaften Ausführungsform der Erfindung ist vorgesehen, dass
a. die Gewichtsanteile von Isoleucin zwischen 3 und 20 Gew.-% liegen, vorzugsweise bei 12,5 Gew.-%,
b. die Gewichtsanteile von Leucin zwischen 5,5 und 33 Gew.-% liegen, vorzugsweise bei 20 Gew.-%,
c. die Gewichtsanteile von Lysin zwischen 4 und 10 Gew.-% liegen, vorzugsweise bei 6,8 Gew.-%,
d. die Gewichtsanteile von Methionin zwischen 0,5 und unter 1 Gew-% liegen,
e. die Gewichtsanteile von Phenylalanin zwischen 5 und 20,5 Gew.-% liegen, vorzugsweise bei 12,5 Gew.-%,
f. die Gewichtsanteile von Threonin zwischen 3 und 18 Gew.-% liegen, vorzugsweise bei 9,5 Gew.-%,
g. die Gewichtsanteile von Tryptophan zwischen 3 und 25 Gew.-% liegen, vorzugsweise bei 8,5 Gew.-%, und
h. die Gewichtsanteile von Valin zwischen 2 und 20 Gew.-% liegen, vorzugsweise bei 19,5 Gew.-%.

Es hat sich gezeigt, dass bei Gewichtsanteilen in diesen Bereichen besonders wirksame Mengenkombinationen der verschiedenen Aminosäuren realisierbar sind.

Gemäß einer vorteilhaften Ausführungsform der Erfindung liegt das Präparat in Pulverform vor und/oder ist ausgebildet und bestimmt zur Herstellung einer wässrigen Lösung und/oder ist ausgebildet und bestimmt zur Herstellung eines Getränks, insbesondere eines Mineral-Basen-Getränks. Als Getränk lässt sich das Präparat besonders einfach, flexibel und schnell einnehmen, wodurch eine schnelle Wirkung sichergestellt wird. Auch ermöglicht ein Getränk die problemlose und bequeme regelmäßige Verwendung, ohne die sich die gewünschten Wirkungen beim Menschen in der Regel nicht erzielen lassen.

Gemäß einem Ausführungsbeispiel der Erfindung wird das Nahrungsmittelergänzungspräparat in Form von Kapseln bereitgestellt. Dabei enthält eine Kapsel 0,5g Aminosäuren. Gemäß der WHO-Empfehlung, die eine tägliche Aufnahme von 15g Aminosäuren empfiehlt, wird die Einnahme von bis zu 18 Kapseln pro Tag empfohlen (unter Berücksichtigung der Aminosäuren-Zufuhr durch andere Nahrungsmittel).

Pro Kapsel sind gemäß diesem nicht erfindungsgemäßen Ausführungsbeispiel die folgenden Gewichtsmengen vorgesehen: 62,5 mg Isoleucin, 100 mg Leucin, 37,5 mg Lysin, 100 mg Phenylalanin, 50 mg Threonin, 50 mg Tryptophan, 100 mg Valin. Zudem enthalten sind 0,75 mg Bioperin. Die Kapseln weisen eine Hülle auf, die sich vorzugsweise noch nicht im Mund auflöst, im Magen aber schnell zersetzt, so dass eine schnelle Aufnahme der Aminosäuren erreicht werden kann.

## Patentansprüche

1. Nahrungsergänzungsmittelpräparat enthaltend die Aminosäuren Leucin, Isoleucin, Valin, Lysin, Phenylalanin, Threonin und Tryptophan,
wobei
das Präparat ein Gewürzextrakt enthält, das die Resorption der Aminosäuren beschleunigt und/oder optimiert,
**dadurch gekennzeichnet, dass** das Präparat Methionin sowie zusätzlich Folsäure und/oder Vitamin B2 und/oder Vitamin B6 und/oder Vitamin B12 enthält, wobei der Gewichtsanteil von Methionin bei unter 1 Gew.-% liegt.

2. Nahrungsergänzungsmittelpräparat nach Anspruch 1, **dadurch gekennzeichnet, dass** das Gewürzextrakt ein Pfefferextrakt, insbesondere ein Schwarzpfefferextrakt, umfasst.

3. Nahrungsmittelergänzungspräparat nach Anspruch 1 oder 2, **dadurch gekennzeichnet, dass** das Gewürzextrakt Piperin (chemische Bezeichnung 1-Piperoylpiperidin C₁₇ H₁₉NO₃), insbesondere als Alkaloid, umfasst.

4. Nahrungsmittelergänzungspräparat nach einem der vorherigen Ansprüche, **dadurch gekennzeichnet, dass** das Präparat Taurin enthält.

5. Nahrungsmittelergänzungspräparat nach einem der vorherigen Ansprüche, **dadurch gekennzeichnet, dass** das Präparat Histidin enthält.

6. Nahrungsmittelergänzungspräparat nach einem der vorherigen Ansprüche, **dadurch gekennzeichnet, dass** das Präparat Arginin enthält.

7. Nahrungsmittelergänzungspräparat nach einem der vorherigen Ansprüche, **dadurch gekennzeichnet, dass** in dem Präparat
a. die Gewichtsanteile von Isoleucin zwischen 3 und 20 Gew.-% liegen, vorzugsweise bei 12,5 Gew.-%,
b. die Gewichtsanteile von Leucin zwischen 5,5 und 33 Gew.-% liegen, vorzugsweise bei 20 Gew.-%,
c. die Gewichtsanteile von Lysin zwischen 4 und 10 Gew.-% liegen, vorzugsweise bei 6,8 Gew.-%,
d. die Gewichtsanteile von Methionin zwischen 0,5 und unter 1 Gew% liegen,
e. die Gewichtsanteile von Phenylalanin zwischen 5 und 20,5 Gew.-% liegen, vorzugsweise bei 12,5 Gew.-%,
f. die Gewichtsanteile von Threonin zwischen 3 und 18 Gew.-% liegen, vorzugsweise bei 9,5 Gew.-%,
g. die Gewichtsanteile von Tryptophan zwischen 3 und 25 Gew.-% liegen, vorzugsweise bei 8,5 Gew.-%, und
h. die Gewichtsanteile von Valin zwischen 2 und 20 Gew.-% liegen, vorzugsweise bei 19,5 Gew.-%.

8. Nahrungsmittelergänzungspräparat nach einem der vorherigen Ansprüche, **dadurch gekennzeichnet, dass** das Präparat in Pulverform vorliegt und/oder ausgebildet und bestimmt ist zur Herstellung einer wässrigen Lösung und/oder ausgebildet und bestimmt ist zur Herstellung eines Getränks, insbesondere eines Mineral-Basen-Getränks.

## Claims

1. A food supplement preparation including the amino acids leucine, isoleucine, valine, lysine, phenylalanine, threonine and tryptophan,
wherein
the preparation contains a spice extract which accelerates and/or optimizes the resorption of the amino acids,
**characterized in that** the preparation contains methionine as well as in addition folic acid and/or vitamin B2 and/or vitamin B6 and/or vitamin B12, with the weight percentage of methionine being below 1% by weight.

2. The food supplement preparation according to claim 1, **characterized in that** the spice extract comprises a pepper extract, particularly a black pepper extract.

3. The food supplement preparation according to claim 1 or 2, **characterized in that** the spice extract comprises piperin (chemical identifier 1 - piperoylpiperidine C₁₇H₁₉NO₃) particularly as an alkaloid.

4. The food supplement preparation according to any one of the preceding claims, **characterized in that** the preparation contains taurine.

5. The food supplement preparation according to any one of the preceding claims, **characterized in that** the preparation contains histidine.

6. The food supplement preparation according to any one of the preceding claims, **characterized in that** the preparation contains arginine.

7. The food supplement preparation according to any one of the preceding claims, **characterized in that** in the preparation
a. the weight percentages of isoleucine are between 3 and 20% by weight, preferably at 12.5% by weight,
b. the weight percentages of leucine are between 5.5 and 33% by weight, preferably at 20% by weight,
c. the weight percentages of lysine are between 4 and 10% by weight, preferably at 6.8% by weight,
d. the weight percentages of methionine are between 0,5 and below 1% by weight,
e. the weight percentages of phenylalanine are between 5 and 20.5% by weight, preferably at 12.5% by weight,
f. the weight percentages of threonine are between 3 and 18% by weight, preferably at 9.5% by weight,
g. the weight percentages of tryptophan are between 3 and 25% by weight, preferably at 8.5% by weight, and
h. the weight percentages of valine are between 2 and 20% by weight, preferably at 19.5% by weight.

8. The food supplement preparation according to any one of the preceding claims, **characterized in that** the preparation is supplied in powder form and/or designed and intended for preparing an aqueous solution and/or designed and intended for preparing a drink, particularly a mineral-base drink.

## Revendications

1. Préparation de complément alimentaire contenant les acides aminés leucine, isoleucine, valine, lysine, phénylalanine, thréonine et tryptophane,
dans laquelle
la préparation contient un extrait d'épice qui accélère et/ou optimise la résorption des acides aminés,
**caractérisée en ce que** la préparation contient de la méthionine ainsi qu'en outre de l'acide folique et/ou de la vitamine B2 et/ou de la vitamine B6 et/ou de la vitamine B12, la part en poids de la méthionine étant inférieure à 1% en poids.

2. Préparation de complément alimentaire selon la revendication 1, **caractérisée en ce que** l'extrait d'épice comprend un extrait de poivre, en particulier un extrait de poivre noir.

3. Préparation de complément alimentaire selon la revendication 1 ou 2, **caractérisée en ce que** l'extrait d'épice comprend de la pipérine (désignation chimique 1 - pipéroylpipéridine C₁₇H₁₉NO₃), en particulier sous forme d'alcaloïde.

4. Préparation de complément alimentaire selon l'une des revendications précédentes, **caractérisée en ce que** la préparation contient de la taurine.

5. Préparation de complément alimentaire selon l'une des revendications précédentes, **caractérisée en ce que** la préparation contient de l'histidine.

6. Préparation de complément alimentaire selon l'une des revendications précédentes, **caractérisée en ce que** la préparation contient de l'arginine.

7. Préparation de complément alimentaire selon l'une des revendications précédentes, **caractérisée en ce que** dans la préparation
a. les parts en poids d'isoleucine sont comprises entre 3 et 20% en poids, et sont de préférence de 12,5% en poids,
b. les parts en poids de leucine sont comprises entre 5,5 et 33% en poids, et sont de préférence de 20% en poids,
c. les parts en poids de lysine sont comprises entre 4 et 10% en poids, et sont de préférence de 6,8% en poids,
d. les parts en poids de méthionine sont comprises entre 0,5 et inférieures à 1% en poids,
e. les parts en poids de phénylalanine sont comprises entre 5 et 20,5% en poids, et sont de préférence de 12,5% en poids,
f. les parts en poids de thréonine sont comprises entre 3 et 18% en poids, et sont de préférence de 9,5% en poids,
g. les parts en poids de tryptophane sont comprises entre 3 et 25% en poids, et sont de préférence de 8,5% en poids, et
h. les parts en poids de valine sont comprises entre 2 et 20% en poids, et sont de préférence de 19,5% en poids.

8. Préparation de complément alimentaire selon l'une des revendications précédentes, **caractérisée en ce que** la préparation est présente sous forme de poudre et/ou est constituée et destinée pour la fabrication d'une solution aqueuse et/ou est constituée et destinée pour la fabrication d'une boisson, en particulier d'une boisson à minéraux et bases.
